(19) Europäisches Patentamt European Patent Office Office européen des brevets

(11) **EP 4 715 017 A1**

(12) **EUROPEAN PATENT APPLICATION**

(43) Date of publication:
25.03.2026 Bulletin 2026/13

(21) Application number: 24201323.3

(22) Date of filing: 19.09.2024

(51) International Patent Classification (IPC):
*C09D 5/00* (2006.01)  *C09D 7/40* (2018.01)

(52) Cooperative Patent Classification (CPC):
**C09D 5/00; C09D 7/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: Jotun A/S
3202 Sandefjord (NO)

(72) Inventors:
• **AASUM, Inger Helene**
3209 Sandefjord (NO)
• **JENSEN, Hanne**
3209 Sandefjord (NO)
• **FLENSTAD, Siri G**
3209 Sandefjord (NO)

(74) Representative: **Marks & Clerk LLP**
**15 Fetter Lane**
**London EC4A 1BW (GB)**

(54) **COLORANT WITH DIOL**

(57)    The present invention provides an aqueous colouring composition comprising:
(i) 1.0-80 wt% colour pigment;
(ii) 0.4-10 wt% $C_{5-9}$ acyclic, vicinal diol;
(iii) wetting and/or dispersing agent; and
(iv) water;
wherein said composition is substantially free of binder; and
is suitable for colouring aqueous or solvent borne coatings comprising binder(s).

EP 4 715 017 A1

**EP 4 715 017 A1**

**Description**

The present invention relates to an aqueous colouring composition comprising colour pigment, $C_{5-9}$ acyclic, vicinal diol, wetting and/or dispersing agent and water which is suitable for colouring aqueous or solvent borne coatings comprising binder(s). The present invention also relates to a method for making the aqueous colouring composition, and to use of the aqueous colouring composition for preparation of a coating composition such as a paint. Furthermore, the invention relates to a container or canister containing the aqueous colouring composition.

The present invention also relates to a method for preparing a coating composition (e.g. a paint), to a kit for preparing a coating composition and to a coating composition, such as a paint, comprising the aqueous colouring composition.

BACKGROUND

Paints and other coatings are used in numerous applications for protection and for aesthetic appearance. There is a requirement for such products to be available in a very wide range of colours and an increasing demand for an ability to make bespoke colours. However, it is problematic to produce and store multiple differently coloured coatings, such as paint.

Some paint manufacturers have addressed this problem by developing paint tinting systems. Small scale paint tinting systems are used at the retailer's premises and operate on the basis that a variety of colours can be made by adding colouring compositions, also referred to as colorants, to a factory produced base paint. Such machines are often referred to as in-store tinting machines.

Usually a small number of base paints (or other coatings) are provided to the retailer and these are customized by the addition of one or more colouring compositions, typically in liquid form. Thus, the retailer need only stock three or four base paints, spanning the range of light to deep shades, and then finishes preparation of a coloured paint by adding colouring composition(s) to obtain the final colour. This allows for a large number of colours to be made available to the consumer, in relatively small volumes, without the disadvantage of needing to store large volumes of pre-made coloured paints.

Similar principles can be applied for paint tinting systems on a larger scale used at larger retailers for providing colouring compositions to batches of paint at a larger scale, as well as to paint tinting systems for mass production of bespoke paints.

Typically a specific paint colour requires 1 to 5 colouring compositions. However, a paint tinting machine usually has many more available colouring compositions, for example 15-25 different colouring compositions, in order to produce the full colour range. The colouring composition(s) are added to the base paint with the amount of colouring composition and combination of different colouring compositions being controlled by a computer program. The colouring compositions that are added may be based on a stored colour combination or can be created by using an algorithm to determine a custom shade, such as a shade for matching a customer's specified colour. The colouring combination will be set for a specific base paint, which may be white or clear, for example.

Paint tinting systems necessarily include a number of storage vessels (i.e. canisters) containing the colouring compositions and a mechanism for conveying the colouring composition(s) to the base paint and dispensing it via nozzles. This may include various pumps and so on. The system also includes a control system, typically computerized, for setting the required combination of base paint and colouring composition(s) and for controlling the delivery of colouring composition(s). After the colouring composition(s) has been added, it is mixed into the base paint, usually via shaking a sealed paint container.

There is a drive in the paint industry from regulatory authorities and consumers to produce waterborne products to replace solvent borne products (e.g. coating compositions, colouring compositions) to reduce volatile organic compounds (VOCs). Unlike solvent borne compositions, aqueous colouring compositions are prone to microbial attack in the wet state as the environment is suitable for survival and growth of microorganisms.

Active substances, often referred to as wet-state preservatives, are used in waterborne products such as aqueous colouring compositions to provide microbial protection whilst the product is prepared, stored in its packaging and used. Without preservatives, aqueous compositions will experience uncontrolled microbial growth resulting in spoilage of the composition. However, both the number of, and the use concentrations of, wet state preservatives need to be lowered to comply with different biocide regulations introduced globally. The European Biocide Regulation is today the most stringent and restrictive biocide regulation in place.

Conventionally used preservatives, such as the isothiazolinones (e.g. MIT and CIT), may be restricted in the future due to their skin sensitizing properties. Isothiazolinones have been used in the paint industry since the 1980s, and they are very effective both for wet-state and dry-film preservation. In recent years, a strong increase in allergic contact dermatitis has been observed resulting from the use of personal care products containing isothiazolinones.

Nevertheless, it is of course important that an aqueous colouring composition is storage stable for a long time as products are produced, stored, distributed, e.g. to shops, where they are used to tint base paints bought by the end consumer, and thereby impact the total amount of preservatives in the end-product. The longevity of colouring compositions (i.e. the length of time they may be stored for), combined with their high pigment concentrations, which increases the likelihood of agglomeration, makes storage stability a particular challenge.

## SUMMARY OF THE INVENTION

Viewed from a first aspect, the present invention provides an aqueous colouring composition comprising:

(i) 1.0-80 wt% colour pigment;
(ii) 0.4-10 wt% $C_{5-9}$ acyclic, vicinal diol;
(iii) wetting and/or dispersing agent; and
(iv) water;

wherein said composition is substantially free of binder.

Alternatively viewed, the present invention provides an aqueous colouring composition comprising:

(i) 1.0-80 wt% colour pigment;
(ii) 0.4-10 wt% $C_{5-9}$ acyclic, vicinal diol;
(iii) wetting and/or dispersing agent; and
(iv) water;

wherein said composition is substantially free of binder; and
is suitable for colouring aqueous or solvent borne coatings comprising binder(s).

Viewed from a further aspect, the present invention provides a method for making an aqueous colouring composition as hereinbefore defined, comprising mixing: colour pigment; $C_{5-9}$ acyclic, vicinal diol; wetting and/or dispersing agent; and water.

Viewed from a further aspect, the present invention provides a container or canister containing the aqueous colouring composition as hereinbefore defined.

Viewed from a further aspect, the present invention provides a use of an aqueous colouring composition as hereinbefore defined for preparation of a coating composition, e.g. a paint.

Viewed from a further aspect, the present invention provides a kit for preparing a coating composition comprising:

(i) at least one aqueous colouring composition as hereinbefore defined; and
(ii) a base paint.

Viewed from a further aspect, the present invention provides a method for preparing a coating composition, preferably a paint, comprising mixing at least one aqueous colouring composition as hereinbefore defined, and a base paint.

Viewed from a further aspect, the present invention provides a coating composition, preferably a paint, comprising at least one aqueous colouring composition as hereinbefore defined, and a base paint.

## DEFINITIONS

As used herein, the terms "aqueous composition" and "aqueous colouring composition" refers to a composition wherein the continuous phase is water.

As used herein, the term "colouring composition" refers to a concentrated pigment composition containing stably dispersed colour pigments, and optionally fillers, that is added to a base paint, e.g. a coating composition, to provide a desired colour. Typically colouring compositions are added after the general preparation of a base composition to provide a coloured coating composition, such as a paint. Colouring compositions may be added, alone or in combination with other colouring compositions containing different pigments, to the base paint and mixed in to achieve a desired colour of a ready to use paint. Typically a colouring composition comprises colour pigments, a continuous aqueous phase, wetting and/or dispersing agent(s) and optionally other ingredients such as additives, but contain less than a film-forming amount of binder. A colouring composition may also be referred to as tinter, colorant, colorant composition, colorant dispersion, pigment paste or pigment dispersion.

Colouring compositions should not be confused with ink or ink compositions. In contrast to colouring compositions, inks are ready-to-use compositions which are made for printing directly onto a surface, while colouring compositions are added to a base paint of a coating composition to provide a final coating having the desired color. Thus, inks are merely coated directly onto a surface to dry there, while colouring compositions need to be compatible with the base paint to which they are dispersed and mixed into before coated onto a surface. Compared to colouring compositions, generally inks contain relatively less stable and less durable colour pigments. Generally inks contain less colour pigment, which reflects the fact they are in ready-to-use form, rather than in concentrated form for addition to a base paint.

As used herein, the term "tinted" refers to a coating or coating composition that is coloured by the presence of a colouring composition.

As used herein, the term "colour pigment" refers to a pigment that is added to a composition to give colour. Colour pigments include white pigments, such as $TiO_2$ and black pigments such as carbon black.

As used herein, the term "base paint" refers to a ready to use paint where the colour has not been finally adjusted. Base paints are an essential component of any in-store tinting system and comprise polymeric binder(s), pigment(s) and additives. Typically they are grouped into sets of three or four base paints (light, medium, deep and optionally a clear) to cover the range of colours in each product type. One or more colouring compositions are dispersed into the required base paint having the desired sheen level of a given product type, transforming the base paint into a final, tinted paint with desired colour characteristics. The final, tinted paint will when be applied to a surface, form a film or coating thereon.

As used herein, the term "multicolour tinting system" refers to a tinting machine comprising a plurality of colouring compositions, and software containing colour formulations. When the multicolour tinting system is activated by a specific colour being chosen, a specific combination and amount of colouring compositions are added to the base composition by the tinting machine, according to its software. The composition is mixed, preferably with a mixing machine, giving a composition with homogenous colour.

As used herein, the term "coating composition" refers to a composition that, when applied to a surface, forms a continuous film or coating thereon. An ink is not considered to be a coating composition since it does not form a continuous film.

As used herein, the term "acyclic" refers to non-cyclic groups. Hence a $C_{5-9}$ acyclic diol is a $C_{5-9}$ non-cyclic diol.

As used herein, the term "vicinal diol" refers to a compound wherein two hydroxyl groups occupy vicinal positions, i.e. they are attached to adjacent carbon atoms. Vicinal diols are different to geminal diols, wherein two hydroxyl groups are attached to the same carbon atom.

As used herein, the term "wetting and/or dispersion agent" refers to agents that function as a wetting and/or dispersing agent. Wetting agents are surface-active substances that improve the wetting of solids. Dispersing agents are substances that prevent particles flocculating by various mechanisms (e.g. electrostatic effects, steric effects).

As used herein, the term "polymeric binder" or "binder" refers to a film forming polymer that will form a coherent film.

As used herein, the term "substantially free of binder" refers to an amount of binder which is less than a continuous film-forming amount, i.e. the binder-containing composition cannot form a coherent film.

As used herein, the term "rheology modifier" refers to additives used to achieve the desired rheological profile/characteristics of the composition, such as flow behaviour and viscosity.

As used herein, the term "foam control agent" refers to agents that prevent formation of stable foams, or which destabilize already existing foams. Foam control agents are sometimes referred to as antifoams or defoamers.

As used herein, the term "filler" refers to solid particles that are used to reduce cost, improve processing (e.g. flow properties and pumpability) and performance properties, and to "dilute" or "spread out" more expensive colour pigments. They are often referred to as extenders.

As used herein, the term "humectant" refers to organic components that reduces the drying of colorants, e.g. propylene glycol. Typically humectants have volatility in the range of 150-300 °C.

As used herein, the term "preservative" refers to compounds that act to prevent biological growth, e.g. growth of bacteria, mould and/or algae. Preservatives are also referred to as biocides, in can biocides, (dry) film biocides, antimicrobial agents, biologically active compounds, (dry) film preservatives, in can preservatives, wet state preservatives, wet state biocides and toxicants. Preservatives can also be named according to the target microorganism e.g. fungicide, mildewicide, algicide, algaecide and bactericide.

As used herein, the term "wet-state preservative" refers to compounds that are used for the preservation of aqueous compositions by the control of microbial deterioration in order to protect the composition in the wet state i.e. during production and storage.

As used herein, the term "volatile organic compound (VOC)" refers to organic compounds having a boiling point $\leq$ 250°C at 101.3 kPa. This is the definition given in EU Directive 2004/42/CE.

As used herein, the term "molecular weight" refers to weight average molecular weight (Mw), unless otherwise specified. It is determined by Gel Permeation Chromatography.

As used herein, the term "dispersion" refers to a dispersion of particles, e.g. colour pigments, or droplets dispersed in a continuous aqueous liquid phase. Typically, the continuous liquid phase is water. Droplets dispersed in water can be referred to as an emulsion. In the present invention the term "dispersion" refers to both particles and droplets (emulsions) dispersed in water.

As used herein, the term "weight % (wt%)", when used in relation to individual constituents of the composition, refers to the actual weight of constituent, i.e. without volatile components present, unless otherwise specified.

As used herein, the term "weight % (wt%)", when used in relation to the aqueous composition, refers to an ingredient weight (solids) relative to the total weight of the composition, i.e. including non-volatile and volatile components, unless otherwise specified.

DETAILED DESCRIPTION OF THE INVENTION

The present invention relates to an aqueous colouring composition comprising:

(i) 1.0-80 wt% colour pigment;
(ii) 0.4-10 wt% $C_{5-9}$ acyclic, vicinal diol;
(iii) wetting and/or dispersing agent; and
(iv) water;

wherein said composition is substantially free of binder.

The aqueous colouring composition of the present invention is suitable for colouring aqueous or solvent borne coatings comprising binder(s). As such the aqueous colouring composition of the present invention is suitable for addition to a base paint.

Advantageously, the colouring composition of the present invention is waterborne (i.e. aqueous), yet has microbial resistance, and is therefore storage stable. It has been found that microbial, in particular bacterial, resistance is achieved even when the pH is in the range 7.0-8.5, which is often necessary to avoid degradation of colour pigments. This is also beneficial in that the resulting composition is non-corrosive, and can be safely used by end-users, and without damage to tinting systems. Moreover the level of microbial resistance achieved is sufficient that wet-state preservatives may optionally be omitted from the composition. This is advantageous as it avoids skin sensitisation issues associated with some of the most commonly used wet-state preservatives and also satisfies the regulatory requirements on the amount and types of wet-state preservatives present in compositions.

Preferred aqueous colouring compositions of the present invention further comprise one of more of: (v) wet-state preservatives; (vi) filler; (vii) foam control agent; and/or (viii) rheology modifier. Other additives that may be present, e.g. that are preferably present, include pH modifier and/or humectant.

*Pigment*

The aqueous colouring composition of the present invention comprises at least one colour pigment. Preferably the aqueous colouring composition comprises 1-6 colour pigments, more preferably 1-4 colour pigments, and still more preferably 1-3 colour pigments.

The colour pigments present in the aqueous colouring composition of the present invention may be inorganic pigments, organic pigments, or mixtures thereof. Thus suitable pigment mixtures can include mixtures of inorganic and organic colour pigments, as well as mixtures of different inorganic colour pigments and mixtures of different organic colour pigments.

Some preferred aqueous colouring compositions of the present invention comprise inorganic colour pigments. Other preferred aqueous colouring compositions of the present invention comprise organic colour pigments.

Representative examples of suitable inorganic colour pigments include metal oxides (e.g. titanium dioxide, iron oxides, chrome oxides etc.), Complex Inorganic Colour Pigments (CICPs) (e.g. chromium and nickel titanate, cobalt blue and green aso), bismuth vanadate pigments, zinc sulfide, zinc oxide, and carbon black.

Representative examples of classes of suitable organic colour pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketopyrrolo-pyrrol pigments.

Specific examples of non-white coloured pigments include iron oxides, e.g. black iron oxide, red iron oxide, transparent red oxide, yellow iron oxide, transparent yellow oxide, brown iron oxide (a blend of red and yellow oxide with black), zinc sulfide, chromium oxide green, naphthol red, phthalocyanine compounds (e.g. phthalocyanine green, phthalonitrile blue), ultramarine blue azo pigments and carbon black.

Non-infrared-absorptive colour pigments may also be used.

A huge range of suitable colour pigments are commercially available. Examples of some commercially available colour pigments include IRGAZIN RED L 3670 HD from Sun Chemical, BAYFERROX YELLOW 3910 LV and BAYFERROX RED 130 M from Lanxess, HELIOGEN GREEN L 8690 from Sun Chemical.

Preferably the maximum particle size of colour pigments present in the aqueous colouring composition of the present invention is approximately 10 to 20 $\mu$m, measured by using a grind gauge or Hegman gauge according to ISO 1524.

Preferably the total amount of colour pigment present in the aqueous colouring composition of the invention is 1-80 wt%, preferably 1.5-70 wt%, more preferably 1.5-60 wt% and still more preferably 2-55 wt%, based on the total weight of the composition.

Preferably the total amount of organic colour pigments present in the aqueous colouring composition of the invention is 5-35 wt%, based on the total weight of the composition.

Preferably the total amount of inorganic colour pigments present in the aqueous colouring composition of the invention is 40 to 70 wt% based on the total weight of the composition.

*Vicinal diol*

The aqueous colouring composition of the present invention comprises a vicinal diol, namely a $C_{5-9}$ acyclic, vicinal diol, preferably a $C_{6-9}$ acyclic, vicinal diol, more preferably a $C_{6-8}$ acyclic, vicinal diol, still more preferably a $C_6$, $C_7$ or $C_8$ acyclic, vicinal diol, and especially preferably a $C_6$ or $C_7$ acyclic, vicinal diol.

Preferably the vicinal diol is linear. Preferably the vicinal diol is non-branched.

In the $C_{5-9}$ acyclic, vicinal diol present in the aqueous colouring composition of the present invention, the vicinal diols may be present on any two adjacent carbon atoms. For instance, they may be present on carbons 1 and 2, carbons 2 and 3, carbons 3 and 4, carbons 4 and 5, carbons 6 and 7, carbons 7 and 8 and carbons 8 and 9. Preferably, however, the vicinal diol is a 1,2 acyclic, vicinal diol.

Preferably the vicinal diol contains only two hydroxyl groups. Preferably, therefore, there are no other hydroxyl groups in the vicinal diol, other than those forming the vicinal diol functional group.

The vicinal diol present in the aqueous colouring composition of the present invention preferably does not comprise any N, S or Si atoms. Preferably the only heteroatom-containing functional groups present in the vicinal diol are hydroxy groups.

The vicinal diol present in the aqueous colouring composition of the present invention preferably has a boiling point of 200-290 °C, more preferably 210-280 °C and still more preferably 220-270 °C, wherein boiling point is measured at 1 atm.

The vicinal diol present in the aqueous colouring composition of the present invention preferably has a density of 0.90 to <1.00 g/cm$^3$, more preferably 0.92-0.97 g.cm$^3$ and still more preferably 0.93-0.96 g/cm$^3$.

One preferred aqueous colouring composition of the present invention comprises a mixture of two or more vicinal diols.

Another preferred aqueous colouring composition of the present invention comprises a single vicinal diol.

A preferred aqueous colouring composition of the present invention comprises ≥0.4 wt%, preferably ≥1 wt%, more preferably ≥2 wt% and still more preferably ≥4 wt% $C_{5-9}$ acyclic, vicinal diol, based on the total weight of the composition. A further preferred aqueous colouring composition of the present invention comprises ≤10 wt%, preferably ≤7 wt%, more preferably ≤ 5 wt% and still more preferably ≤3 wt% $C_{5-9}$ acyclic, vicinal diol, based on the total weight of the composition.

A particularly preferred aqueous colouring composition of the present invention comprises 0.4-10.0 wt%, preferably 0.50 to 7.0 wt%, more preferably 1.0-5.0 wt%, and still more preferably 1.0-3.0 wt% $C_{5-9}$ acyclic, vicinal diol, based on the total weight of the composition.

Another particularly preferred aqueous colouring composition comprises 0.4 to <10.0 wt%, more preferably 0.50 to <7.0 wt%, still more preferably 1.0 to <5.0 wt% and still more preferably 1.0 to <3.0 wt% $C_{5-9}$ acyclic, vicinal diol, based on the total weight of the composition.

Whenever the wt% of $C_{5-9}$ acyclic, vicinal diol is stated herein, it refers to the total amount of $C_{5-9}$ acyclic, vicinal diol. Hence if a mixture of two or more $C_{5-9}$ acyclic, vicinal diols is present, the wt% present refers to the total amount. As an example, if a composition comprises 1.0 wt% $C_6$ acyclic, vicinal diol and 1.0 wt% $C_7$ acyclic, vicinal diol, the total amount of $C_{5-9}$ acyclic, vicinal diol is 2.0 wt%, and the composition meets the requirement to comprise >0.4 wt% $C_{5-9}$ acyclic, vicinal diol.

*Dispersing and/or wetting agent*

The aqueous colouring composition of the present invention comprises a wetting and/or dispersing agent. Wetting and/or dispersing agents are added to disperse and/or stabilize colour pigments and, if present, fillers in the composition. Wetting and/or dispersing agents are often also referred to as surfactants.

A wide range of wetting and dispersing agents are commercially available and may be employed in the aqueous colouring composition of the invention. Suitable wetting and/or dispersing agents include conventional anionic, cationic, non-ionic and amphoteric wetting and dispersing agents as well as combinations thereof. The wetting and dispersing agents may be polymeric and/or non-polymeric organic molecules. Preferably a mixture of wetting and dispersing agents is used.

Examples of wetting and/or dispersing agents suitable for use in the aqueous colouring composition are polyacrylates and salts thereof (such as potassium, sodium or ammonium salt), polycarboxylates and salts thereof (such as potassium, sodium or ammonium salt), polyphosphates and salts thereof (such as potassium, sodium or ammonium salt), polyethers, polyacrylamides, polyethercarboxylates, polyalkylene glycols, polymeric phosphoric acid esters, polyalkylamines, block copolymers (e.g. EO/PO block copolymers), polysorbates, ethoxylated fatty alcohols, fatty alcohol sulfates, fatty acids, ethoxylated fatty acids, phospholipids, betaines, lecithins, alkylolamino amides, polyurethanes, acetylenic diols, sulfonates/sulfosuccinates, and any mixtures thereof.

Suitable commercially available wetting and/or dispersing agents are available from a variety of suppliers.

Examples of ethoxylated fatty alcohols are Hedipin-CFA/100 which is coco fatty acid with EO available from KLK OLEO, and Berol 185 which is a non-ionic surfactant based on a synthetic primary alcohol available from AkzoNobel (Nouryon).

Examples of phospholipids are e.g. YELKIN TS SOYA LECITHINE which is a wetting and dispersing additive based on soya lecithin available from ARCHER DANIELS MIDLAND AND CO and non-GMO Denothin 62 which is an extract with soybean oil available from Denofa A.S.

An example of a polycarboxylate is e.g. OROTAN 731 DP which is a sodium salt of a carboxylate available from DOW.

Examples of block copolymers are e.g. DISPERBYK-185 and DISPERBYK-190 which both are solutions of high molecular weight block copolymer with pigment affinic groups available from BYK, and Hydropalat WE 3161 which is a block copolymer with polyethylene glycol and polypropylene glycol available from BASF.

Examples of betaines are e.g. Hydropalat WE 3633 and HYDROPALAT WE 3645 which are aqueous preparations based on betaine available from BASF.

Examples of acrylic polymers are e.g. DISPERBYK-2010 which is an aqueous emulsion of a structured acrylate copolymer with pigment-affinic groups available from BYK, and Dispex Ultra PA 4560 which is a modified polyacrylate available from BASF.

Examples of acetylenic diols are e.g Surfynol 104DPM Surfactant which is a nonionic dynamic wetting agent and molecular defoamer available from Air Products, TEGO Wet 238 which is a modified polyether-siloxane-based superwetter available from Evonik, Surfynol AD01 Surfactant which is a nonionic dynamic wetting agent and molecular defoamer available from Air Products, Carbowet 100 surfactant which is a nonionic APEO-free, solvent-free surfactant with multifunctional properties available from Air Products.

Examples of sulfonates and sulfosuccinates are e.g. Hydropalat WE 3475 available from BASF, DISPONIL SUS 87 SPECIAL which is a sulfosuccinate based on fatty alcohol polyglycol ether, disodium salt available from BASF, NUOSPERSE 2006 which is an organic-solvent free, anionic active compound available from Elementis, Maxemul 7201 which is a versatile anionic surfactant available from Croda, UFARYL DL 90 C is a linear alkyl benzene sulphonate, sodium salt available from Unger.

An example of an anionic wetting and dispersing agent is, e.g. Phospholan PE169 which is a mixture of mono- and di-phosphate esters based on alcohol ethoxylate in acid form available from AkzoNobel (NOURYON).

Other examples of suitable commercially available wetting and/or dispersing agents include:

POLYSORBATE 81 which is an ethoxylated sorbitan monooleate from Huana Guangdong Chemistry;
POLYSORBATE 20 which is an ethoxylated sorbitan ester available from Ataman Chemicals;
DISPERBYK-180 which is an alkylol ammonium salt of a copolymer with acidic groups available from BYK;
EMPICOL ESC 3 / L which is an aqueous solution of sodium laureth sulfate available from Innospec;
EMPICOL ESC 3 / Z which is an aqueous solution of sodium laureth sulfate available from Innospec;
HANSANOL NS 243 which is sodium lauryl ether sulfate based on C12-C14 fatty alcohol ethoxylated with EO available from Enaspol;
VP-D 262 which is a surfactant with groups of high pigment affinity available from Evonik;
Mackam C2M CONC NP MB which is an amphoteric surfactant available from VERDANT;
MIRANOL C2M CONC NP which is a very soft amphoteric surface-active agent available from SOLVAY.

Depending on the pigment(s) present, the amount of wetting and/or dispersing agents present varies from less than 0.5 wt% up to more than 100 wt%, calculated on the amount of pigment.

Preferably the total amount of wetting and/or dispersing agent present in the aqueous colouring composition of the present invention is 2-30 wt%, preferably 5-25 wt%, more preferably 7.5-20 wt% and still more preferably 7.5-15 wt%, based on the total weight of the composition.

*Water*

The aqueous colouring composition of the present invention is water-based and comprises water. Water may be tap, deionized, distilled, reverse osmosis or recycled water. Preferably the water present in the aqueous colouring composition of the present invention is tap water.

In the aqueous colouring composition of the present invention, water is preferably present in an amount in the range from 5-60 wt% and more preferably in the range from 20-50 wt%, based on the total weight of the composition. This represents the total amount of water present, i.e. the amount of water added as well as the water added via its presence in other ingredients.

*Binder*

The aqueous colouring composition of the present invention is substantially free of binder. This is because the aqueous colouring composition described herein is a colouring composition that is typically added to a binder-containing coating composition, e.g. a base paint. The base paint typically comprises all of the binder required to form a continuous film. Thus a preferred aqueous colouring composition of the present invention comprises less than a film-forming amount of binder, i.e. the pigment volume concentration (PVC) is above the critical PVC.

If present, the binder may be organic or inorganic.

Examples of inorganic binders include silicate, slaked lime, water glass and silicone emulsion.

Typical organic binders have a weight average molecular weight of 3,000-3,000,000. Examples of organic binder include poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof.

More preferably the aqueous colouring composition of the present invention comprises less than 1 wt% inorganic binder, based on the total weight of the composition.

More preferably the aqueous colouring composition of the present invention comprises less than 1 wt% organic binder, based on the total weight of the composition.

More preferably the aqueous colouring composition of the present invention comprises less than 1 wt% total binder, based on the total weight of the composition.

In the aqueous colouring composition of the present invention, the amount of binder is preferably (solids) less than 1.0 wt%, preferably less than 0.9 wt%, more preferably less than 0.75 wt% and still more preferably less than 0.5 wt%, e.g. less than 0.25 wt%, based on the total weight of the composition.

Yet more preferably the aqueous colouring composition of the present invention is substantially free (e.g. free) of binder, i.e. comprises no binder or 0 wt% binder.

*Wet-state preservatives*

Optionally the aqueous colouring composition of the present invention comprises one or more wet-state preservatives. Wet-state preservatives may derive from the raw materials used to make the composition. In this case, no wet-state preservatives per se are added during manufacture of the aqueous colouring composition itself. Optionally wet-state preservatives may be added during preparation of the aqueous colouring composition itself.

Representative examples of suitable wet-state preservatives that may be present in aqueous colouring composition include: Reaction mass of 5-chloro-2-methyl-4-isothiazolin-3-one and 2-methyl-2H-isothiazol-3-one (3:1); Isothiazolines such as (CIT/MIT); 5-chloro-2-methyl-4-isothiazolin-3-one (CIT); 2-Methyl-4-isotiazolin-3-one (MIT); 2-Methyl-1,2-Benzisothiazol-3(2H)-one (MBIT); 1,2-Benzisothiazolin-3-one (BIT); 2-Octyl-2H-isothiazol-3-one (OIT); Pyrithiones such as e.g. Zinc pyrithione (ZnPT); organohalogenes such as 2-Bromo-2-nitro-1,3-propanediol (Bronopol); carbamates such as 3-Iodo-2-propynylbutylcarbamate (IPBC)

Preferred wet-state preservatives that may be present in an aqueous colouring composition include OIT, CIT/MIT, Bronopol, MIT, IPBC and combinations thereof.

A preferred aqueous colouring composition of the present invention comprises ≤0.10 wt%, preferably ≤0.05 wt%, more preferably ≤0.015 wt% (150 ppm) and still more preferably ≤0.005 wt% (50 ppm) wet-state preservatives, based on the total weight of the composition. More preferably such a composition comprises 0-0.10 wt%, preferably 0-0.05 wt% and more preferably 0.001-0.015 wt% wet-state preservative, based on the total weight of the composition.

Filler

The aqueous colouring composition of the present invention may also comprise one or more fillers. The fillers may be organic, inorganic or mixtures thereof. Preferably the fillers are inorganic fillers.

Representative examples of suitable inorganic fillers include inorganic mineral fillers or mineral extenders such as kaolin, talc, barium sulphate, nepheline syenite, etc. Preferably the filler is talc and/or kaolin. Suitable inorganic fillers are available commercially, e.g. Industrial Talc Powder F020 from Yantai Fengyuan Minerals CO. Ltd, Belcatalc H5 from Minerals I Derivats S.A., Talc EGB 7 from Udaipur Mineral Development Syndicate PVT. Ltd, Micro Talc IT Extra-AW from Elementis Minerals B.V.

Typically, inorganic fillers are substantially insoluble in the aqueous colouring composition, and are dispersed therein. If present, the average particle size ($D_{50}$) of the inorganic filler in its dispersed state in the colouring composition, measured according to ISO 13317, Sedigraph, is typically <5 $\mu$m. Preferably the fineness of grind according to ISO 1524 is a maximum 20 $\mu$m.

Alternatively or additionally, the aqueous colouring composition of the present invention may comprise one or more organic fillers. The organic filler is preferably solid organic filler particles. The solid organic filler particles preferably comprise, and more preferably consist of poly(meth)acrylate, polystyrene, polyacrylamide, polysiloxane, polyolefin (e.g. polyethylene, polypropylene, polytetrafluoroethylene), polyacrylonitrile, nylon, poly(vinyl ester), and copolymers thereof. More preferably, however, solid organic filler particles are absent from the aqueous composition.

Preferably the amount of filler, e.g. inorganic filler, present in the aqueous colouring composition of the present invention is 0.5-40 wt%, preferably 0.7-35 wt%, more preferably 1-35 wt%, and still more preferably from 2-30 wt%, based on the total weight of the composition.

*Foam control agent*

The aqueous colouring composition of the present invention preferably comprises a foam control agent. Foam control agents are sometimes also referred to as defoamers.

A wide range of foam control agents are commercially available, and may be used in the aqueous colouring composition of the present invention. Representative examples of suitable foam control agents include polysiloxane defoamers such as BYK-044 and BYK-023, from BYK.

Preferably the amount of foam control agent present in the aqueous colouring composition of the present invention is 0-0.55 wt%, preferably 0.01-0.5 wt%, more preferably 0.02-0.4 wt% and still more preferably 0.03-0.25 wt%, based on the total weight of the composition.

*Rheology modifier*

The aqueous colouring composition of the present invention may optionally comprise one or more rheology modifiers. When present the rheology modifier may be an organic or inorganic rheology modifier. Preferably, however, the rheology modifier is an inorganic rheology modifier.

Rheology modifiers present in the aqueous colouring composition of the present invention may be selected from silica (e.g. fumed silica), polysaccharide rheology modifiers, associative rheology modifiers, clays, cellulosic rheology modifiers (e.g. hydroxyethyl cellulose) and mixtures thereof.

Exemplary clay rheology modifiers for use in the aqueous colouring composition of the present invention include kaolin clays, smectite clays, illite clays, chlorite clays, synthetic clays, or organomodified clays, for example organomodified smectite.

Exemplary polysaccharide rheology modifiers for use in the aqueous colouring composition of the present invention include alginin, guar gum, locust bean gum, and xanthan gum.

Exemplary associative rheology modifiers for use in the aqueous colouring composition of the present invention include nonionic synthetic associative rheology modifiers (niSAT), hydrophobically modified ethoxylated urethanes (HEUR), hydrophobically modified Swollen emulsion (HASE) and styrene-maleic anhydride terpolymer (SMAT). Acid acrylate copolymers of ethyl acrylate and methacrylic acid (crosslinked) and acrylic terpolymers (crosslinked) formed from ethyl acrylate, methacrylic acid and nonionic urethane surfactant monomers can also be used as an associative rheology modifier.

If a rheology modifier is present in the aqueous colouring composition of the present invention, fumed silica is preferred, e.g. in combination with inorganic fillers.

Preferably the amount of rheology modifier is 0-0.2 wt%, preferably 0-0.1 wt%, more preferably 0-0.05 wt% and more preferably 0-0.025 wt%, based on the total weight of the composition.

*pH modifier*

The aqueous colouring composition of the present invention preferably comprises a pH modifier.

Preferably the type and amount of pH modifier is selected so as to adjust the pH of the aqueous colouring composition to 6.0-9.0, preferably 7.0-8.5, more preferably 7.0-8.3 and still more preferably 7.0 to 8.0.

In a preferred aqueous colouring composition of the present invention the pH modifier is selected from alkali metal hydroxide, alkaline earth metal hydroxide, alkali metal carbonate, ammonium hydroxide, ammonia, amines, alkylalkoxysilanes, alkylalkoxysiloxanes, monoalkylsilanetriol, dialkylsilanediol, trialkylsilanol, alkali metal salts of monoalkylsilanetriol and combinations thereof. Examples of suitable alkali metal hydroxide include lithium hydroxide, potassium hydroxide, and sodium hydroxide. Examples of suitable alkaline earth metal hydroxide include calcium hydroxide and magnesium hydroxide. Examples of suitable alkali metal carbonate include sodium carbonate and sodium bicarbonate. Examples of suitable amines include 2-amino-2-methyl-1,3-propanediol, 2-amino-2-ethyl-1,3-propanediol, 2-dimethylamino-2-methylpropanol, dimethylglucamine, 2-amino-1-butanol, tris(hydroxymethyl)aminomethane, 2-amino-2-methyl-1-propanol, and 1-amino-2-methyl-2-propanol.

In a particularly preferred composition of the present invention the pH modifier is selected from sodium hydroxide, potassium hydroxide, 2-amino-2-methyl-1-propanol (AMP) or combinations thereof.

The amount of pH modifier preferably present in the aqueous colouring composition of the present invention depends on the nature of the pH modifier used (e.g. its alkalinity) and on the nature (e.g. acidity) of the other ingredients present in the composition. The skilled person will readily be able to determine a suitable amount of pH modifier based on the target pH, e.g. 6.0-9.0, preferably 7.0-8.5, more preferably 7.0-8.3 and still more preferably 7.0 to 8.0.

The aqueous colouring composition of the present invention preferably comprises 0-0.2 wt%, preferably 0-0.17 wt%, more preferably 0-0.16 wt%, and still more preferably 0-0.15 wt% pH modifier (as active ingredient), based on the total weight of the composition.

*Humectant*

Optionally the aqueous colouring composition of the present invention comprises a humectant, i.e. volatile or low volatilty organic compounds that reduce the drying of colorants. Propylene glycol and propanediol are examples of typical humectants.

Representative examples of humectants that may be present in the aqueous colouring composition of the present invention include polyethers such as polyalkyl glycols (e.g. low to moderate molecular weight polyethylene and polypropylene glycols); polyhydroxy ethers, such as those formed from epoxide polymerization; ethylene glycol polyethers; ethylene and propylene glycols; hexylene glycols; polysaccharide compounds, such as polysorbitan and polysorbitol; glycerin, sorbitol, sodium polyglutamate; modified urea compounds; and polyalkylene oxides, such as polyethylene and polypropylene oxide.

Some useful commercially available humectants include polyethylene glycols e.g. PEG 300, PEG 400, or PEG 600. Propylene glycol is an exemplary polyhydric alcohol. Many humectants are also considered as solvents.

The aqueous colouring composition of the present invention preferably comprises 0-16 wt%, preferably 0.5-12 wt%, more preferably 0.5-10 wt% and still more preferably 1-8 wt% humectant, based on the total weight of the composition.

*Solvent*

The aqueous colouring composition of the present invention is water-based. However, the aqueous colouring composition may still comprise one or more solvents. Additional solvents, if present, are preferably selected so as not to undesirably increase VOC.

Exemplary solvents that may be present include ethoxylated glycerol, e.g. in 0-10 wt% based on the total weight of the composition, propylene glycol in 0-20 wt% based on the total weight of the composition, or PEG 400 in 0-10 wt% based on the total weight of the composition.

The aqueous colouring composition of the present invention preferably comprises 0-5 wt%, preferably 0-2.5 wt%, more preferably 0-1 wt%, and still more preferably less than 0.5 wt% solvent, based on the total weight of the composition.

*Preferred compositions*

A preferred aqueous colouring composition of the present invention comprises:

    (i) 1.5-70 wt% colour pigment;

(ii) 0.50 to 7.0 wt% $C_{5-9}$ acyclic, vicinal diol;
(iii) 5-25 wt% wetting and/or dispersing agent; and
(iv) water,

wherein said composition is substantially free of binder; and preferably
is suitable for colouring aqueous or solvent borne coatings comprising binder(s).

Another preferred aqueous colouring composition of the present invention comprises:

(i) 2-55 wt% colour pigment;
(ii) 1.0 to 3.0 wt% $C_{5-9}$ acyclic, vicinal diol;
(iii) 7.5-15 wt% wetting and/or dispersing agent; and
(iv) water,

wherein said composition is substantially free of binder; and preferably
is suitable for colouring aqueous or solvent borne coatings comprising binder(s).

Another preferred aqueous colouring composition of the present invention comprises:

(i) 1.5-70 wt% colour pigment;
(ii) 0.50 to 7.0 wt% $C_{5-9}$ acyclic, vicinal diol;
(iii) 5-25 wt% wetting and/or dispersing agent; and
(iv) water,

wherein said composition comprises less than 1.0 wt%, preferably less than 0.9 wt%, more preferably less than 0.75 wt% and still more preferably less than 0.5 wt%, e.g. less than 0.25 wt%, binder (solids) based on the total weight of the composition; and preferably
is suitable for colouring aqueous or solvent borne coatings comprising binder(s).

Another preferred aqueous colouring composition of the present invention comprises:

(i) 2-55 wt% colour pigment;
(ii) 1.0 to 3.0 wt% $C_{5-9}$ acyclic, vicinal diol;
(iii) 7.5-15 wt% wetting and/or dispersing agent; and
(iv) water,

wherein said composition comprises less than 1.0 wt%, preferably less than 0.9 wt%, more preferably less than 0.75 wt% and still more preferably less than 0.5 wt%, e.g. less than 0.25 wt%, binder (solids) based on the total weight of the composition; and preferably is suitable for colouring aqueous or solvent borne coatings comprising binder(s).

Another preferred aqueous colouring composition of the present invention comprises:

(i) 1.5-70 wt% colour pigment;
(ii) 0.50 to 7.0 wt% $C_{5-9}$ acyclic, vicinal diol;
(iii) 5-25 wt% wetting and/or dispersing agent; and
(iv) water,
(v) 0-0.05 wt% wet state preservatives;
(vi) 0.5-40 wt% filler;
(vii) 0.01-0.5 wt% foam control agent; and
(viii) 0-0.1 wt% rheology modifier,

wherein said composition comprises less than 1.0 wt%, preferably less than 0.9 wt%, more preferably less than 0.75 wt% and still more preferably less than 0.5 wt%, e.g. less than 0.25 wt%, binder (solids) based on the total weight of the composition; and preferably
is suitable for colouring aqueous or solvent borne coatings comprising binder(s).

Another preferred aqueous colouring composition of the present invention comprises:

(i) 2-55 wt% colour pigment;

(ii) 1.0 to 3.0 wt% $C_{5-9}$ acyclic, vicinal diol;
(iii) 7.5-15 wt% wetting and/or dispersing agent; and
(iv) water,
(v) 0.001-0.015 wt% wet state preservatives;
(vi) 2-30 wt% filler;
(vii) 0.03-0.25 wt% foam control agent; and
(viii) 0-0.025 wt% rheology modifier,

wherein said composition comprises less than 1.0 wt%, preferably less than 0.9 wt%, more preferably less than 0.75 wt% and still more preferably less than 0.5 wt%, e.g. less than 0.25 wt%, binder (solids) based on the total weight of the composition; and preferably is suitable for colouring aqueous or solvent borne coatings comprising binder(s).

*Properties of the composition*

A preferred aqueous colouring composition of the present invention has a density of 0.8-2.6 and preferably 1.0-2.4 kg/dm$^3$.
Preferably the aqueous colouring composition of the present invention has a calculated VOC content of 0-270 g/L, more preferably 0-265 g/L and still more preferably 0-260 g/L.
Preferably the aqueous colouring composition of the present invention has a rheology-profile and viscosity suitable for use in tinting machines. Preferably the aqueous colouring composition of the present invention has a Stormer viscosity of 55-110 KU, more preferably 60-105 KU and still more preferably 65-100 KU. Preferably the aqueous colouring composition of the present invention has an ICI viscosity of 10-900 cP, more preferably 50-700 cP, and still more preferably 150-500 cP.
Preferably the aqueous colouring composition of the present invention has wt% solids of 40-80 wt%, more preferably 45-78 wt% and still more preferably 50-76 wt%. These wt% solids contents are suitable for use in a conventional tinting machine.
A preferred aqueous colouring composition of the present invention has a shelf-life of 12 months, preferably 24 months and more preferably 36 months, e.g. at 23 °C and 50%RH.
A preferred aqueous colouring composition of the present invention is resistant to bacteria, preferably as determined by the method set out in the examples here. The aqueous colouring composition of the invention is resistant to gram positive bacteria and gram negative bacteria. The results against gram negative bacteria are particularly strong.

Manufacture and containers

The present invention also relates to a method of making an aqueous colouring composition as hereinbefore described, comprising mixing: colour pigment; $C_{5-9}$ acyclic, vicinal diol; wetting and/or dispersing agent; and water. Any conventional production method may be used.
In one method of making an aqueous colouring composition as hereinbefore defined, the method comprises:

(i) mixing said $C_{5-9}$ acyclic, vicinal diol, wetting and/or dispersing agents and water to produce a mixture; and
(ii) adding, and dispersing, said colour pigment in said mixture.

Alternatively, the method of making an aqueous colouring composition as hereinbefore described comprises:

(i) mixing said wetting and/or dispersing agents and water to produce a mixture;
(ii) adding, and dispersing, said colour pigment in said mixture; and
(iii) adding said $C_{5-9}$ acyclic, vicinal diol to produce said aqueous composition.

In both of the above-described methods, other liquid ingredients (e.g. foam control agent, humectants) are preferably added in step (i).
In both of the above-described methods, other dry ingredients (e.g. fillers, rheology modifiers) are preferably added in step (ii).
Optionally, the colour or colour strength of the aqueous colouring composition may be adjusted by adding water and/or solvent after the other ingredients are dispersed.
Dispersion may be achieved in any conventional manner, e.g. using a Dissolver or in a two-step process, wherein colour pigments are initially dispersed in a Dissolver and then milled prior to dispersion. Commercially available milling and dispersion equipment may be employed.

Kit and methods

The present invention also relates to a kit for preparing a coating composition comprising:

(i) at least one aqueous colouring composition as hereinbefore described; and
(ii) a base paint.

A preferred kit further comprises a tinting machine configured to dispense said at least one aqueous colouring composition into said base paint, and a mixing device to mix said at least one aqueous colouring composition and said base paint. Preferably the at least one aqueous colouring composition is dispensed from a canister containing said composition. Such canisters containing the aqueous colouring composition of the present invention form a further aspect of the invention. The canisters are configured for insertion into, and to operate with, a tinting system.

Conventional mixing devices, e.g. shakers, may be used.

Preferred kits are located in stores.

The present invention also relates to a method for preparing a coating composition, preferably a paint, comprising mixing at least one aqueous colouring composition as hereinbefore defined, and a base paint.

Preferred methods are carried out using the afore-mentioned kit.

*Coating compositions*

The present invention also relates to a coating composition, preferably a paint, comprising at least one aqueous colouring composition as hereinbefore described, and a base paint. Preferably a relatively low amount of aqueous colouring composition of the present invention is added to a base paint. Generally the aqueous colouring composition of the present invention has a relatively high concentration of colour pigments compared to, e.g. base paint or paint. However, there are a few exceptions since there is a requirement for some aqueous colouring compositions of low colour pigment concentration for the accuracy of pastel shades in small pack sizes.

The invention will now be described by way of the following non-limiting examples.

EXAMPLES

**Materials**

The compounds used in the examples were all purchased commercially. The diols employed in the examples are summarised in Table below.

Table 1. Diols employed in the examples

|  | Name | Boiling point (°C) | Density (g/cm3) | CAS no. |
|---|---|---|---|---|
| Diol 1 | 1,2-propanediol | 187 | 1.04 | 57-55-6 |
| Diol 2 | 1,2-butanediol | 191 | 1.00 | 584-03-2 |
| Diol 3 | 1,2-hexanediol | 228 | 0.95 | 6920-22-5 |
| Diol 4 | 1,2-heptanediol | 237 | 0.94 | 3710-31-4 |
| Diol 5 | 1,2-decanediol | 279 | 0.94 | 1119-86-4 |

**Test Methods**

**• pH measurements**

The pH of the compositions was measured with a pH meter (InoLab pH7110) and a precision electrode with temperature sensor (WTW SenTix 81). The pH meter was calibrated with buffer solution with pH 7.0 and pH 10.0. The sample temperature for pH measurements was 23 $\pm$1 °C.

**• Determination of the density of the compositions**

The density of the compositions was determined according to ISO 2811-1 :2016 using a metal pycnometer at 23°C. The measurement was done on samples in a 100 ml container.

• **Calculation of Vol% solids**

The following equations were used to calculate vol% solids:

$$Volume = (weight / density)$$

$$Vol\% \ solid = \frac{\sum Vol \ pigments \ and \ filler + \sum Vol \ solid \ binder + \sum Vol \ solid \ additives}{Total \ wet \ colouring \ composition \ volume} * 100$$

• Calculation of Volatile Organic Compounds (VOC)

$$VOC \ [g/L] = \frac{total \ weight \ VOC \ [g]}{\left( weight \ coloring \ composition - measured \ density \ colouring composition \right) [L]}$$

• **Test method to assess microbiological quality of the aqueous colouring composition**

This test was done to ensure that the aqueous compositions are not infected before being evaluated for resistance to bacterial growth in the wet state.

Tryptone Soya Agar (TSA) with 2,3,5-triphenyltetrazolium chloride (TTC) was used to determine total bacteria in the sample (composition) according to the test method described below.

A sterile cotton swab was immersed in the aqueous composition, and excess material was removed by pressing the cotton swab against the inside of the sample container. The sample was streaked over the agar surface, evenly distributing the material on the agar. TSA plates were incubated at 30°C for 72 hours before evaluation.

The number of colony forming units (cfu) was determined visually, and the plates were scored according to the rating in Table 2. The table indicates if the microbiological result was acceptable or not.

Table 2. Scoring of bacteria

| Score | Growth on agar plate | cfu/g in sample | Evaluation of result |
|---|---|---|---|
| 0 | No growth | $< 10^2$ | OK |
| 1 | Minimal growth: 1-10 colonies on agar plate | $10^2 - 10^3$ | OK |
| 2 | Slight growth: maximum 100 colonies on agar plate | $10^3 - 10^4$ | Not acceptable |
| 3 | Medium growth: maximum 300-400 colonies on agar plate | $10^4 - 10^5$ | Not acceptable |
| 4 | Equal growth: possible to differentiate single colonies, more than 400 colonies on agar plates | $10^5 - 10^6$ | Not acceptable |
| 5 | Heavy growth: not countable, but agar plate is not fully grown | $10^6 - 10^7$ | Not acceptable |
| 6 | Heavy growth: no visible single colonies on agar plate | $> 10^7$ | Not acceptable |

All aqueous colouring compositions used in the examples had an acceptable microbiological quality.

• **Test method to evaluate resistance to bacterial growth in the wet state**

Evaluation of resistance of aqueous colouring compositions to bacterial growth in the wet state was assessed as described below. The method is based on IBRG P / 015 / (March 2015) "A Method for Evaluating the Resistance of Aqueous Based Paints to Bacterial Growth in the Wet State".

Sample preparation

100 g of aqueous colouring composition was weighed in sterile containers with screw caps.

Preparation of inoculum

The inoculum used in the test was a mixture of bacteria. A total of 8 different gram-negative rod bacteria was used; *Pseudomonas paucimobilis, Aeromonas hydrophila, Pseudomonas putida* and several *Pseudomonas aeruginosa* species.

Three days before every inoculation, a small aliquot of the bacteria was taken from -80 °C and transferred to tubes with 5 ml tryptic soy broth (TSB). The TSB with bacteria were further incubated in a shake-incubator at 30°C and 70 rpm for 36-48 hours. Following this, 3 ml of the culture in the tube with TSB were transferred to approximately 50 ml TSB in 100 ml Erlenmeyer flask closed with a cotton plug. The flask was further incubated in a shake-incubator at 30°C and 70 rpm for 24-36 hours. These cultures were used as the inoculum in the test.

On the day of inoculation, all bacterial cultures were diluted with sterile peptone water and adjusted to achieve an optical density at 600 nm that corresponds to $1 \times 10^8 - 5 \times 10^8$ cfu/ml. Disposable cuvettes in optical polystyrene and VWR® UV-1600PC, UV/Visible Spectrophotometer was used for this purpose.

Equal volumes of each bacterial culture were mixed in a sterile bottle to obtain a mixed inoculum.

A total viable count test was performed to verify cfu/ml: 1 ml of diluted samples were added to petri plates and molten agar medium was poured over. The plates were swirled quickly to properly mix the sample with the medium. The mixed medium was allowed to solidify and was incubated at 30°C for five days. Following the incubation, the numbers of isolated colonies were counted.

Inoculation

Each 100 g aqueous colouring composition was inoculated with 1 ml mixed inoculum once per week for up to 8 consecutive weeks. The microorganisms were mixed well into the sample using sterile inoculating loops. The samples were incubated at room temperature during the test. If the sample failed, no additional inoculations were made.

Streak out of samples

Six days after each inoculation, a small amount (approximately 10 μl) of the composition was streaked onto TSA agar plates with TTC using sterile inoculating loops. Excess materials were removed by pressing the inoculation loop against the inside of the sample container. Each composition was streaked in duplicate, one streak-out on each side of a line bisecting the plate.

The agar plates with streak outs were incubated at 30 °C for 5 days before the number of colony forming units (cfu) was determined visually, and the plates were scored according to the scale below.

Growth of microorganisms was evaluated using the following scale:

0 = no growth (no visible colonies)
1 = 1-10 colonies
2 = 11-100 colonies
3 = 101-1000 colonies
4 = >1000 colonies (or confluent growth)

The composition fails the test, and considered to be infected with bacteria, if its score was ≥ 3.

**Preparation of compositions**

The components of the compositions were mixed in the proportions set out in the Tables below, wherein amounts are given in wt% (unless otherwise specified). A number of comparative examples were also prepared.

General procedure

Colouring compositions are pigment dispersions that need milling equipment to obtain the desired particle fineness. The particle size distribution of the finished product affects properties like fineness of grind, colour strength, stability etc.

Procedure:

1. Liquid ingredients, i.e. water, defoamer, dispersing agents, surfactants etc. were mixed
2. Soluble solid components, e.g. solid surfactants, were dissolved in the liquid obtained in step 1
3. Colour pigments, rheology modifier, and inorganic fillers were added, and mixed into the mixture obtained in step 2

4. Dispersion at high shear force is required to obtain the desired particle size. Depending on the nature of the colour pigment, two procedures were followed to disperse the compositions obtained in step 3:

a. Easily dispersed colour pigments, e. g. $TiO_2$, were dispersed by Dissolver only;
b. Other pigments, including most organic colour pigments, were first pre-dispersed in a Dissolver, and then milled in a bead mill, e. g. Bühler Rotor Agitator Mill to a particle fineness of maximum 20 $\mu$m measured according to EN ISO 1524:2020 / ASTM D1210:05(2014).

5. Finally, the viscosity, colour and colour strength was adjusted by adding water/solvent or neutral, non-coloured compositions to the compositions obtained from step 4.
6. Liquid or solid diols were added to / mixed into the colouring composition samples just before testing.

No wet-state preservatives were added to any of the examples or comparative examples. The low concentrations of wet-state preservatives present were due to their presence in some of the raw materials employed.

**Results**

The results in table 3 below show that colouring compositions of the invention comprising C6 and C7 vicinal diols in a concentration of 0.5 wt% or 1.0 wt% have resistance to bacterial growth in the wet state. Example 2, which comprises 1 wt% C6 vicinal diol, had the highest level of bacterial resistance. Examples 3 and 4, which comprise 0.5 wt% and 1.0 wt% C7 vicinal diol, also have good levels of bacterial resistance. The bacterial resistance is achieved with very low concentrations of wet state preservatives.

Table 3 Examples Red brown colouring composition with diols having different chain length. n.d. = not determined

| Ingredients (wt%) | EX 1 | EX2 | EX 3 | EX 4 |
|---|---|---|---|---|
| Inorganic pigment (Pigment Red 101) | 48.4 | 48.4 | 48.4 | 48.4 |
| Inorganic fillers (mineral fillers) | 11.4 | 11.4 | 11.4 | 11.4 |
| Wetting and dispersing agents | 11.8 | 11.8 | 11.8 | 11.8 |
| Foam control agents | 0.004 | 0.004 | 0.004 | 0.004 |
| | | | | |
| Rheology modifiers | 0.01 | 0,01 | 0.01 | 0.01 |
| NaOH aq. (10 wt%) | 0.75 | 0.75 | 0.75 | 0.75 |
| Water | 27.1 | 26.6 | 26.1 | 25.6 |
| Diol 1 | | | 1.0 | 1.0 |
| Diol 3 | 0.50 | 1.00 | | |
| Diol 4 | | | 0.50 | 1.00 |
| **Total** | **100** | **100** | **100** | **100** |
| | | | | |
| **Properties** | | | | |
| pH | n.d. | n.d. | 7.3 | 7.1 |
| Specific gravity (kg/dm3) | 1.87 | 1.87 | 1.87 | 1.87 |
| Calculated VOC (g/L) | 29 | 38 | 29 | 38 |
| Vol % solids | 46.7 | 46.7 | 46.7 | 46.7 |
| Amount wet state preservatives (introduced from raw materials) (wt%) | <0.0001 | <0.0001 | <0.0001 | <0.0001 |
| **Microbiological test** | | | | |
| Number of inoculations needed to infect the colouring composition with bacteria | 4 | 8 | 6 | 6 |

In contrast, comparative examples lacking vicinal diol (CE1) or comprising vicinal diols of shorter (C3 and C4) or longer (C10) chain lengths (CE2-4) did not provide any resistance to bacterial growth in the wet state (Table 4 below)

Table 4 Comparative examples Red brown colouring composition. n.d.= not determined

| Ingredients (wt%) | CE 1 | CE2 | CE 3 | CE 4 |
|---|---|---|---|---|
| Inorganic pigment (Pigment Red 101) | 48.4 | 48.4 | 48.4 | 48.4 |
| Inorganic fillers (mineral fillers) | 11.4 | 11.4 | 11.4 | 11.4 |
| Wetting and dispersing agents | 11.8 | 11.8 | 11.8 | 11.8 |
| Foam control agents | 0.004 | 0.004 | 0.004 | 0.004 |
| | | | | |
| Rheology modifiers | 0.01 | 0.01 | 0.01 | 0.01 |
| NaOH aq. (10 wt%) | 0.75 | 0.75 | 0.75 | 0.75 |
| Water | 26.6 | 27.1 | 27.1 | 26.6 |
| Diol 1 | 1.0 | | | |
| Diol 2 | | 0.50 | | |
| Diol 5 | | | 0.5 | 1.0 |
| **Total** | **100** | **100** | **100** | **100** |
| | | | | |
| **Properties** | | | | |
| pH | 7,6 | n.d. | n.d. | n.d. |
| Specific gravity (kg/dm3) | 1.87 | 1.87 | 1.87 | 1.87 |
| Calculated VOC (g/L) | 19 | 29 | 29 | 38 |
| Vol % solids | 46.7 | 46.7 | 46.7 | 46.7 |
| Amount wet state preservatives (introduced from raw materials) (wt%) | <0.0001 | <0.0001 | <0.0001 | <0.0001 |
| **Microbiological test** | | | | |
| Number of inoculations needed to infect the colouring composition with bacteria | 1 | 2 | 1 | 1 |

The results in table 5 below show that different colouring compositions of the invention comprising C6 vicinal diol in a concentration of 2.0 wt% have resistance to bacterial growth in the wet state. The bacterial resistance is achieved with very low concentrations of wet state preservatives. These colouring compositions comprise colour pigments which providing white (E7), ochre (E8), and yellow orange colour (E9). In contrast comparative examples (CE7-9) without C6 vicinal diol, were not resistant or showed very poor resistance to bacterial growth in the wet state.

Table 5 Different colouring compositions with and without 1,2-hexanediol

| Ingredients (wt%) | CE 7 (White) | EX 7 (White) | CE 8 (Ochre) | EX 8 (Ochre) | CE 9 (Yellow orange) | EX 9 (Yellow orange) |
|---|---|---|---|---|---|---|
| Inorganic pigment ($TiO_2$) | 64.2 | 64.2 | | | | |
| Inorganic pigment (Pigment Yellow 42) | | | 51.4 | 51.4 | | |
| Organic pigment (Pigment Yellow 83) | | | | | 32.3 | 32.3 |
| Inorganic fillers | 0.72 | 0.72 | | | | |
| Inorganic fillers) | | | 3.47 | 3.47 | | |
| Inorganic fillers | | | | | 1.95 | 1.95 |

(continued)

| Ingredients (wt%) | CE 7 (White) | EX 7 (White) | CE 8 (Ochre) | EX 8 (Ochre) | CE 9 (Yellow orange) | EX 9 (Yellow orange) |
|---|---|---|---|---|---|---|
| Wetting and dispersing agents | 10.0 | 10.0 | | | | |
| Wetting and dispersing agents | | | 8.4 | 8.4 | | |
| Wetting and dispersing agents | | | | | 14.3 | 14.3 |
| Foam control agents | 0.05 | 0.05 | 0.15 | 0.15 | 0.21 | 0.21 |
| Ethoxylated polyhydric alcohol | 4.3 | 4.3 | 3.05 | 3.05 | 8.1 | 8.1 |
| Rheology modifiers | 0 | 0 | 0 | 0 | 0.02 | 0.02 |
| NaOH aq. (10 wt%) | 0.28 | 0.28 | 0.80 | 0.80 | 0.02 | 0.02 |
| Water | 20.4 | 18.4 | 32.7 | 30.7 | 43.1 | 41.1 |
| Diol 3 | 0 | 2 | 0 | 2 | 0 | 2 |
| **Total** | **100** | **100** | **100** | **100** | **100** | **100** |
| | | | | | | |
| **Properties** | | | | | | |
| pH | 7.5 | 7.5 | 7.5 | 7.5 | 7.5 | 7.5 |
| Specific gravity (kg/dm3) | 1.98 | 1.98 | 1.72 | 1.72 | 1.14 | 1.14 |
| Calculated VOC (g/L) | 85 | 85 | 52 | 52 | 92 | 92 |
| Vol % solids | 52.6 | 52.6 | 37.9 | 37.9 | 42.8 | 42.8 |
| Amount wet state preservatives (introduced from raw materials) (wt%) | <0.0001 | <0.0001 | <0.0001 | <0.0001 | <0.0001 | <0.0001 |
| **Microbiological test** | | | | | | |
| Number of inoculations needed to infect the colouring composition with bacteria | 1 | 8 | 1 | 8 | 2 | 8 |

**Claims**

1. An aqueous colouring composition comprising:

   (i) 1.0-80 wt% colour pigment;
   (ii) 0.4-10 wt% $C_{5-9}$ acyclic, vicinal diol;
   (iii) wetting and/or dispersing agent; and
   (iv) water;
   wherein said composition is substantially free of binder; and
   is suitable for colouring aqueous or solvent borne coatings comprising binder(s).

2. A composition as claimed in claim 1, wherein the total amount of colour pigment is 1.5-70 wt%, more preferably 1.5-60 wt% and still more preferably 2-55 wt%, based on the total weight of the composition.

3. A composition as claimed in claim 1 or 2, wherein said $C_{5-9}$ acyclic, vicinal diol is a $C_{6-9}$ acyclic, vicinal diol, preferably a $C_{6-8}$ acyclic, vicinal diol, still more preferably a $C_6$, $C_7$ or $C_8$ acyclic, vicinal diol, and especially preferably a $C_6$ or $C_7$ acyclic, vicinal diol.

4. A composition as claimed in any preceding claim, wherein the amount of $C_{5-9}$ acyclic, vicinal diol is 0.4-10.0 wt%, preferably 0.50 to 7.0 wt%, more preferably 1.0-5.0 wt%, and still more preferably 1.0-3.0 wt%, based on the total weight of the composition.

5. A composition as claimed in any preceding claim, wherein the total amount of dispersing and/or wetting agent is 2-30 wt%, preferably 5-25 wt%, more preferably 7.5-20 wt% and still more preferably 7.5-15 wt%, based on the total weight of the composition.

6. A composition as claimed in any preceding claim, wherein said composition comprises less than a film-forming amount of binder.

7. A composition as claimed in any preceding claim, wherein the amount of binder (solids) is less than 1.0 wt%, preferably less than 0.9 wt%, more preferably less than 0.75 wt% and still more preferably less than 0.5 wt%, e.g. less than 0.25 wt%, based on the total weight of the composition.

8. A composition as claimed in any preceding claim, wherein the composition comprises 0-0.10 wt%, preferably 0-0.05 wt% and more preferably 0.001-0.015 wt% wet-state preservatives, based on the total weight of the composition

9. A composition as claimed in any preceding claim, wherein the composition further comprises one or more fillers, preferably inorganic fillers, a foam control agent, a rheology modifier, a pH modifier, a humectant and/or a solvent.

10. A method for making an aqueous colouring composition as claimed in any one of claims 1-9, comprising mixing: colour pigment; $C_{5-9}$ acyclic, vicinal diol; wetting and/or dispersing agent; and water.

11. A container or canister containing the aqueous colouring composition as claimed in any one of claims 1-9.

12. Use of an aqueous colouring composition as claimed in any one of claims 1-9 for preparation of a coating composition, e.g. a paint.

13. A kit for preparing a coating composition comprising:

    (i) at least one aqueous colouring composition as claimed in any one of claims 1-9; and
    (ii) a base paint.

14. A method for preparing a coating composition, preferably a paint, comprising mixing at least one aqueous colouring composition as claimed in any one of claims 1 to 9, and a base paint.

15. A coating composition, preferably a paint, comprising at least one aqueous colouring composition as claimed in any one of claims 1 to 9, and a base paint.

EUROPEAN SEARCH REPORT

Application Number

EP 24 20 1323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/289460 A1 (ITO HIROSHI [JP]) 6 October 2016 (2016-10-06) * paragraphs [0002, 0035, 0039-0042, 0065, 0069, 0071, 0091-0095, 0111]; Table 1; examples 2, 4, 6; claims 5, 12 * | 1-15 | INV. C09D5/00 C09D7/40 |
| X | US 2023/303848 A1 (NAKATANI MITSUNOBU [JP] ET AL) 28 September 2023 (2023-09-28) * paragraphs [0002, 0012, 0059, 0068-0070, 0087, 0093, 0148]; examples 1-7, example 17, examples 17-24; * | 1-15 | |
| X | US 2013/081553 A1 (SILVER JAMES A [US] ET AL) 4 April 2013 (2013-04-04) * paragraphs [0002, 0085]; examples 1-6; * | 1-15 | |
| X | EP 3 604 454 A1 (TOYO INK SC HOLDINGS CO LTD [JP]; TOYOCOLOR CO LTD [JP]) 5 February 2020 (2020-02-05) * paragraphs [0001,0098]; examples A2-1 to A2-44 * | 1-15 | |
| X | EP 2 330 154 A1 (DAINICHISEIKA COLOR CHEM [JP]; UNIV KYOTO [JP]) 8 June 2011 (2011-06-08) * paragraphs [0001,0107, 0171, 0175]; application examples 1, 2 * | 1-15 | TECHNICAL FIELDS SEARCHED (IPC) C09D |

The present search report has been drawn up for all claims

| Place of search | Date of completion of the search | Examiner |
|---|---|---|
| Munich | 18 July 2025 | Kositza, Matthias |

EPO FORM 1503 03.82 (P04C01)

## ANNEX TO THE EUROPEAN SEARCH REPORT
## ON EUROPEAN PATENT APPLICATION NO.

EP 24 20 1323

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | | Publication date | Patent family member(s) | | Publication date |
|---|---|---|---|---|---|
| US 2016289460 | A1 | 06-10-2016 | JP | 6536796 B2 | 03-07-2019 |
| | | | JP | 2016194012 A | 17-11-2016 |
| | | | US | 2016289460 A1 | 06-10-2016 |
| US 2023303848 | A1 | 28-09-2023 | CN | 116804122 A | 26-09-2023 |
| | | | JP | 2023142522 A | 05-10-2023 |
| | | | US | 2023303848 A1 | 28-09-2023 |
| US 2013081553 | A1 | 04-04-2013 | NONE | | |
| EP 3604454 | A1 | 05-02-2020 | CN | 110461952 A | 15-11-2019 |
| | | | EP | 3604454 A1 | 05-02-2020 |
| | | | JP | 6304439 B1 | 04-04-2018 |
| | | | JP | 2018162430 A | 18-10-2018 |
| | | | TW | 201840743 A | 16-11-2018 |
| | | | US | 2020010709 A1 | 09-01-2020 |
| | | | WO | 2018173901 A1 | 27-09-2018 |
| EP 2330154 | A1 | 08-06-2011 | EP | 2330154 A1 | 08-06-2011 |
| | | | JP | 5733608 B2 | 10-06-2015 |
| | | | JP | 6049027 B2 | 21-12-2016 |
| | | | JP | 2015083688 A | 30-04-2015 |
| | | | JP | WO2010013651 A1 | 12-01-2012 |
| | | | KR | 20110036770 A | 08-04-2011 |
| | | | KR | 20130103632 A | 23-09-2013 |
| | | | US | 2011223529 A1 | 15-09-2011 |
| | | | US | 2013196064 A1 | 01-08-2013 |
| | | | WO | 2010013651 A1 | 04-02-2010 |

EPO FORM P0459

For more details about this annex : see Official Journal of the European Patent Office, No. 12/82